**Europäisches Patentamt**

**European Patent Office**

**Office européen des brevets**

(19)

(11) Veröffentlichungsnummer: **0 027 863**
**B1**

(12)

# EUROPÄISCHE PATENTSCHRIFT

(45) Veröffentlichungstag der Patentschrift:
**10.04.85**

(51) Int. Cl.⁴: **F 41 F 19/02**

(21) Anmeldenummer: **80104779.6**

(22) Anmeldetag: **13.08.80**

(54) **Hydraulische Rohrrücklaufbremse zum Abbremsen des Waffenrohres nach der Geschossdurchlaufzeit.**

(30) Priorität: **25.10.79 DE 2943083**

(43) Veröffentlichungstag der Anmeldung:
**06.05.81 Patentblatt 81/18**

(45) Bekanntmachung des Hinweises auf die Patenterteilung:
**10.04.85 Patentblatt 85/15**

(84) Benannte Vertragsstaaten:
**FR IT SE**

(56) Entgegenhaltungen:
**DE - C - 237 267**
**DE - C - 737 376**
**GB - A - 125 465**
**US - A - 3 410 174**

(73) Patentinhaber: **Rheinmetall GmbH,**
**Ulmenstrasse 125 Postfach 6609, D-4000 Düsseldorf**
**(DE)**

(72) Erfinder: **Metz, Josef, Gillbachstrasse 42, D-4040 Neuss**
**(DE)**
Erfinder: **Zielinski, Erich, Branken 16,**
**D-5657 Haan 2 (DE)**

(74) Vertreter: **Behrens, Ralf Holger, Dipl.-Phys., in Firma**
**Rheinmetall GmbH Ulmenstrasse 125 Postfach 6609,**
**D-4000 Düsseldorf 1 (DE)**

## Beschreibung

Die Erfindung betrifft eine Rohrrücklaufbremse nach dem Oberbegriff des Patentanspruchs.

Ein Gegenstand der vorgenannten Gattung ist bekannt aus der GB-A-125465. Sie betrifft «Verbesserungen an Rohrrücklaufbremsen für schwere Geschütze». Als Beispiele für schwere Geschütze sind Haubitzen und Dreifachlafettierungen genannt.

Ein Hydraulikzylinder mit einem zentral-axial feststehenden, konischen Regeldorn ist vorderseitig mit einer Lafette verbunden. Ein Kolben ist mit dem rückseitigen Ende seiner hohlen Kolbenstange am Geschützrohr befestigt. Kolben und Kolbenstange umschliessen den Regeldorn und sind zur Bewegung in Abhängigkeit von Rück- und Vorlauf des Geschützrohres im Hydraulikzylinder geführt. Innenseitig weist der Hydraulikzylinder in seiner Wandung im Vorderbereich achsparallele Nuten auf. Sie bilden einen ersten Durchlass für Bremsflüssigkeit aus dem Raum vor dem sich bewegenden Kolben in den dahinter liegenden Raum und umgekehrt. Einen zweiten Durchlass bilden Bohrungen durch den Kolben, die unter Einschluss eines Winkels mit der zentralen Längsachse in den Raum um den Regeldorn münden. Dem zweiten Durchlass ist ein Ringventil zugeordnet. Auf dem ersten Teil des Rücklaufweges des Geschützrohres ist der erste Durchlass geöffnet, während das Ringventil zunächst nur einen Teilquerschnitt des zweiten Durchlasses freigibt. Hierdurch soll die Abbremsung vergleichsweise gering gehalten werden. Verschliesst der Kolben auf dem weiteren Rücklaufweg den ersten Durchlass, setzt verstärkte Abbremsung bis zum Stillstand mit anschliessender Bewegungsumkehr ein.

Haubitzen sind für Steilfeuer mit Flächenwirkung bestimmt, und bei Dreifachlafettierungen wird vorzugsweise in Salve geschossen, woraus sich ebenfalls eine Flächenwirkung ergibt.

Derzeitige Hochleistungskanonen, wie sie beispielsweise in Panzerfahrzeugen lafettiert sind, werden zur Wirkung mit gestreckter Flugbahn gegen Punktziele eingesetzt. Bei ihnen kann die Rücklaufgeschwindigkeit des Waffenrohres bis 13 ms$^{-1}$ betragen. Hier spielt eine wesentliche Rolle, dass ein Geschoss weitestgehend störungsfrei das Waffenrohr durchläuft und verlässt. In diesem Zusammenhang ist eine Rohrrücklaufbremse nach der GB-A 125 465 ungeeignet: Mit dem Rücklauf des Geschützrohres setzt nämlich bereits die Abbremsung ein. Ausserdem kann sich durch Schaumbildung in der Bremsflüssigkeit deren Viskosität verringern, und dies führt zu unzulässigen Stossbelastungen. Sie lassen neben einem Verreissen und Versatz des Waffenträgers, beispielsweise Panzer, Deformationen der beteiligten Elemente befürchten, welche zu Funktionsstörungen und zur Unbrauchbarkeit der Einrichtung führen können.

Der Erfindung liegt die Aufgabe zugrunde, eine hydraulische Rohrrücklaufbremse der eingangs genannten Gattungen für Hochleistungskanonen bereitzustellen, die während der Geschossdurchlaufzeit keine Reaktionskräfte in die Lafette einleitet und ferner die Gleichförmigkeit der Bremskraft beim Bremsbeginn unter Vermeidung von Druckspitzen gewährleistet; ein Anfangswert soll das 1,1- bis 1,2-fache der mittleren Bremskraft nicht überschreiten, da andernfalls nachteiligerweise hohe Lafettenkräfte auftreten.

Diese Aufgabe wird durch die im Kennzeichen des Patentanspruchs angegebene Erfindung gelöst. Sie stellt für den Übertritt der Bremsflüssigkeit bei der anfänglichen, der Geschossdurchlaufzeit zugeordneten Kolbenbewegung zwei Durchlässe derart zur Verfügung, dass sich zwei unterschiedliche Flüssigkeitsströmungen bilden können und eine unvermeidbare Flüssigkeitsrestkraft während der Geschossdurchlaufzeit unerheblich bleibt.

Eine Wärmeausgleichskammer gemäss Merkmal h) des Patentanspruchs zeigt die US-A-3 410 174.

Die Erfindung wird nachstehend anhand eines in der Zeichnung dargestellten, bevorzugten Ausführungsbeispiels des näheren erläutert.

Es zeigt

Figur 1 eine hydraulische Rohrrücklaufbremse nach der Erfindung in einem längsaxialen Schnitt, wobei ein Teil versetzt dargestellt ist und

Figur 2 einen Schnitt quer zur Längsachse nach der Linie II–II in Figur 1, wobei jeweils nur erfindungswesentliche Einzelheiten und Zusammenhänge beschrieben werden.

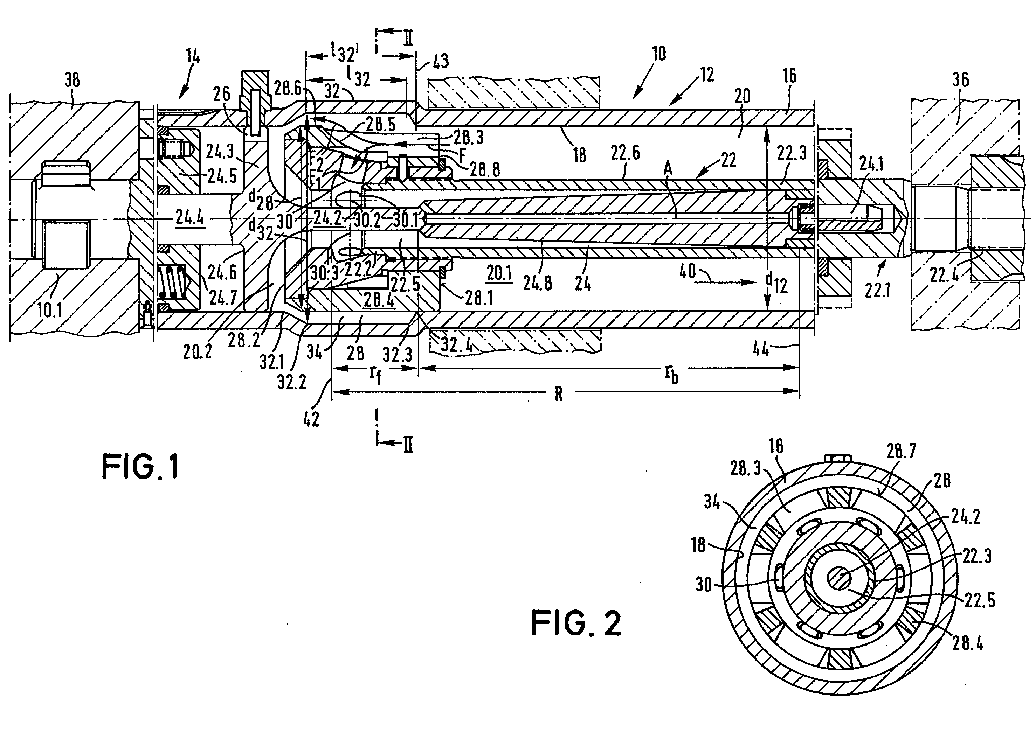

Gemäss Figur 1 weist ein Hydraulikzylinder 10 mit einer Wandung 16 eine Bremskammer 12 und eine Wärmeausgleichskammer 14 auf und ist mit einem Verlängerungsteil 10.1 an einer nicht weiter dargestellten Lafette 38 festgelegt. Beide Kammern 12, 14 weisen im wesentlichen einen Innendurchmesser $d_{12}$ auf. Durch einen Innenraum 20 der Bremskammer 12 erstreckt sich eine hohle Kolbenstange 22, welche mit einem ersten Ende 22.1 ausserhalb des Hydraulikzylinders 10 bei 22.4 an einem Bodenstück 36 einer nicht dargestellten Kanone festgelegt ist und am anderen Ende 22.2 einen Bremskolben 28 mit einem grössten Durchmesser $d_{28}$ trägt. Durch einen von einer Wandung 22.3 umgebenen Innenraum 22.5 der Kolbenstange 22 erstreckt sich axial ein Regeldorn 24, welcher mit einem Bereich 24.2 mit einer Trennwand 24.3 zwischen der Bremskammer 12 und der Wärmeausgleichskammer 14 fest verbunden ist und dessen freies Ende 24.1 beim Abfeuern (Figur 1) dem freien Ende 22.1 der Kolbenstange 22 nahe benachbart ist. Auf ihrer der Wärmeausgleichskammer 14 zugeordneten Seite trägt die Trennwand 24.3 eine mit dem Regeldorn 24 achsfluchtende Kolbenstange 24.4 für einen fliegend angeordneten Ausgleichskolben 24.5 und weist in einem oberen Bereich einen Durchlass 26 zwischen der Bremskammer 12 und der Wärmeausgleichskammer 14 auf. Der Bremskolben 28 erstreckt sich axial zwischen zwei Stirnebenen 28.1 und 28.2. Über seinen Umfang gleichmässig verteilt, weist der Bremskolben 28 sechs Ausnehmungen 28.3 auf, welche durch einen jeweiligen Steg 28.4 voneinander getrennt sind. Jede Ausnehmung 28.3 erstreckt sich von einer Kante 28.8 in der Stirnebene 28.1 und in der Nachbarschaft einer Aussenfläche 22.6 der Kolbenstange 22 bis zu einer sich zwischen den Stegen 28.4 erstreckenden Kante 28.6 auf dem Umfang 28.7 des Bremskolbens 28. Eine Grundfläche 28.5, zunächst von der Kante 28.8 aus parallel zur Längsachse A verlaufend, steigt bis zur Kante 28.6 bogenförmig an. Jede Ausnehmung 28.3 weist einen im wesentlichen radial verlaufenden Durchlass (30) zwischen dem Innenraum 20 und dem Innenraum 22.5 der Kolbenstange 22 auf. Der Bremskolben 28 unterteilt den Innenraum 20 in einen Teil 20.1 auf der der Stirnebene 28.1 zugewandten Seite der Kante 28.6 und einem Teil 20.2 zwischen der Stirnebene 28.2 und der Trennwand 24.3, wobei sich das jeweilige Volumen mit der Axialbewegung des Kolbens 28 wechselseitig ändert. In der Nachbarschaft der Wärmeausgleichskammer 14 ist in der Bremskammer 12 ein Bereich 32 angeordnet, welcher sich mit einem gegenüber $d_{12}$ vergrösserten Innendurchmesser $d_{32}$ axial über eine Länge $l_{32}$ erstreckt. Eine Innenfläche 18 der Wandung 16 weist nahe der Trennwand 24.3 eine Kante 32.1 auf, von welcher aus sich der Innendurchmesser stetig bis zu einer Kehle 32.2 von $d_{12}$ auf $d_{32}$ erweitert. Von der Kehle 32.2 ist eine weitere Kehle 32.3 um die Strecke $l_{32}$ entfernt und von dort verringert sich der Innendurchmesser wieder stetig bis zu einer Kante 32.4 von $d_{32}$ auf $d_{12}$. Eine der Kante 32.4 zugeordnete und durch eine Linie 43 angedeutete Ebene ist in axialer Richtung von einer der Kehle 32.2 entsprechend zugeordneten und nicht näher bezeichneten Ebene in axialer Richtung um eine Strecke $l_{32}$, entfernt. Durch die Aufweitung im Bereich 32 entsteht dort ein Durchlass 34 (Figur 2) kreisringförmigen Querschnitts. Der Innenraum 20 der Bremskammer 12 und ein Innenraum 15 der Wärmeausgleichskammer 14 zwischen einander zugewandten Flächen 24.6 der Trennwand 24.3 und 24.7 des Ausgleichskolbens 24.5 ist mit Bremsflüssigkeit gefüllt. Von einer ersten Begrenzung 42 erstreckt sich bis zu einer zweiten Begrenzung 44 ein gesamter Rücklaufweg R, welcher unterteilt ist in eine kürzere Teilstrecke $r_f$ zwischen der Begrenzung 42 und der Linie 43 und eine längere Teilstrecke $r_b$ zwischen 43 und 44.

Beim Rücklauf des nicht abgebildeten Waffenrohres bewegen sich auch die Kolbenstange 22 und der Bremskolben 28 in Richtung eines Pfeils 40. Im Bereich der Ausnehmungen 28.3 entsteht eine jeweilige Flüssigkeitsströmung F, welche sich – wie andeutungsweise vereinfacht dargestellt – in einen ersten Strömungsast $F_1$ und einen zweiten $F_2$ aufteilt. Die erste Flüssigkeitsströmung $F_1$ ist nach innen gegen die Längsachse A gerichtet und beginnt im Teil 20.1 des Innenraums 20, passiert den Durchlass 30 und den Innenraum 22.5 der Kolbenstange 22 und endet in dem sich beim Rücklauf vergrössernden Teil 20.2 des Innenraums 20. Die zweite Flüssigkeitsströmung $F_2$ ist nach aussen gegen die Innenwandfläche 18 im Bereich 32 gerichtet und gelangt aus dem Teil 20.1 des Innenraums 20 vorbei an einer Fläche des Umfangs 28.7 des Bremskolbens 28 auf vergleichsweise kürzerem Wege in den Teil 20.2. Die erste Flüssigkeitsströmung $F_1$ bleibt im wesentlichen über den gesamten Rücklaufweg R aufrechterhalten und wird auf einer letzten, nicht bezeichneten Teilstrecke durch eine Konusfläche 24.8 des Regeldorns 24 zunehmend gedrosselt. Die zweite Flüssigkeitsströmung $F_2$ entsteht mit dem Beginn der Rücklaufbewegung des Bremskolbens 28 aus der gemeinschaftlichen Ursprungsströmung F. Ihr steht zunächst der jeweilige Durchtrittsquerschnitt der Ausnehmungen 28.3 und dann der kreiszylindrische Durchlass 34 zur Verfügung. Mit zunehmender Annäherung einer durch die Kante 28.6 gebildeten Ebene quer zur Längsachse A an die durch die Kante 32.4 gebildete Ebene (Gerade 43) verkleinert sich der Durchströmquerschnitt für die Flüssigkeitsströmung $F_2$. Sobald eine Ebene 30.3, welche durch die Mittelpunkte 30.2 der inneren Mündungen 30.1 der Durchlässe 30 gebildet wird, die Ebene der Kante 32.4 erreicht hat, nimmt der der Flüssigkeitsströmung $F_2$ verfügbare Durchströmquerschnitt in Abhängigkeit vom Verlauf der Grundfläche 28.5 bis zur Kante 28.6 auf dem Umfang des Bremskolbens 28 vorteilhafterweise im wesentlichen stetig ab, so dass auch die Flüssigkeitsströmung $F_2$ entsprechend gedrosselt wird. Eine hieraus bereits resultierende Bremskraft kann jedoch angesichts sowohl ohnehin als unvermeidbar auftretender Reibungskräfte wie auch eines regelmässig (als Energiespeicher) vorhandenen Rohrvorholers als eine schädliche Rohrschwingungen erzeugende Grösse vernachlässigt werden. Mit dem Durchgang der der Kante 28.6 zugeordneten Ebene durch die Ebene 43 wird die inzwischen stark gedrosselte Flüssigkeitsströmung $F_2$ vollends abgeschnitten. Dieser Vorgang erfolgt durch die voraufgehende stetige Drosselung im wesentlichen stossfrei. Wie aus Figur 1 erkennbar, wird durch die Gerade 43 (der Kante 32.4 zugeordnete Ebene) eine Grenze zwischen der kürzeren Teilstrecke $r_f$ und der längeren Teilstrecke $r_b$ des gesamten Rücklaufweges R gebildet. Dabei ist die Teilstrecke $r_f$ im wesentlichen der Geschossdurchlaufzeit zugeordnet. Da der Übergang von $r_f$, der Teilstrecke im wesentlichen ungebremsten Rücklaufs, zur Teilstrecke $r_b$ des gebremsten Rücklaufs ohne schädlichen Stoss verläuft, wird die Lafette nur innerhalb der eingangs erwähnten Grenzen belastet; hierdurch wird vorteilhafterweise auch das bekannte Verreissen vermieden, welches besonders stark auftreten könnte, wenn – beispielsweise bei einem mit zwei nebeneinander lafettierten Kanonen ausgerüsteten Kasematte-Panzer – eine jeweilige Seitenrichtachse nicht mit der zentralen Flächennormalen der Standfläche des Trägers übereinstimmt. Durch die Erfindung wird somit vorteilhafterweise auch eine grössere Gestaltungsfreiheit im Panzerbau erzielt.

Bezugszeichenliste

| | |
|---|---|
| 10 | Hydraulikzylinder |
| 10.1 | Festlegung von 10 an 38 |

| | | | | |
|---|---|---|---|---|
| 12 | Bremskammer | | 28.4 | Steg |
| $d_{12}$ | Innen⌀ von 12 | | 28.5 | Grundfläche |
| 14 | Wärmeausgleichskammer | | 28.6 | Kante |
| 16 | Zylinderwand | | 28.7 | Umfang von 28 |
| 18 | Innenwandfläche | | 28.8 | Kante |
| 20 | Innenraum von 12 | | $d_{28}$ | Aussen⌀ von 28 |
| 20.1 | Teil von 12 vor zurücklauf. Bremskolben 28 | | 30 | Durchlass |
| | | | 30.1 | Mündung von 30 |
| 20.2 | Teil von 12 hinter zurücklauf. Bremskolben 28 | | 30.2 | Mittelpunkt von 30.1 |
| | | | 30.3 | Ebene durch 30.2 |
| 22 | Kolbenstange | | 32 | Bereich, aufgeweitet |
| 22.1 | Ende von 22 ausserhalb 12 | | $d_{32}$ | Innen⌀ 32 |
| 22.2 | Ende von 22 in 12 | | $l_{32}$ | Länge 1 von 32 |
| 22.3 | Wandung von 22 | | $l_{32'}$ | Länge 2 von 32 |
| 22.4 | Festlegung von 22 an 36 | | 32.1 | Kante |
| 22.5 | Innenraum von 22 | | 32.2 | Kehle |
| 22.6 | Aussenfläche von 22 | | 32.3 | Kehle |
| 24 | Regeldorn | | 32.3 | Kehle |
| 24.1 | freies Ende von 24 | | 32.4 | Kante |
| 24.2 | Bereich von 24 | | 34 | Durchlass |
| 24.3 | Trennwand zwischen 12 und 14 | | 36 | Bodenstück |
| 24.4 | Kolbenstange in 14 | | 38 | Lafette |
| 24.5 | flieg. Ausgleichskolben | | 40 | Richtungspfeil |
| 24.6 | Fläche an 24.3 | | 42 | erste Begrenzung |
| 24.7 | Fläche an 24.5 | | 43 | Gerade (Ebene) |
| 24.8 | Konusfläche an 24 | | 44 | zweite Begrenzung |
| 26 | Durchlass | | F | Flüssigkeitsströmung, Ursprung |
| 28 | Bremskolben | | $F_1$ | Flüssigkeitsströmung 1 |
| 28.1 | Stirnebene an 28 | | $F_2$ | Flüssigkeitsströmung 2 |
| 28.2 | Stirnebene an 28 | | R | Rücklaufweg, gesamt |
| 28.3 | Ausnehmung | | $r_f$ | Rücklaufweg, ungebremst |
| | | | $r_b$ | Rücklaufweg, gebremst |

## Patentanspruch

Hydraulische Rohrrücklaufbremse zum Abbremsen des Waffenrohres nach der Geschossdurchlaufzeit mit einem Hydraulikzylinder (10) einer mit dem Waffenrohr verbundenen und zur Aufnahme eines Regeldorns (24) hohlen Kolbenstange (22) und einem Bremskolben (28), der einen Innenraum (20) des Hydraulikzylinders (10) in einen ersten Teilraum (20.1) vor dem Bremskolben (28) und in einen zweiten Teilraum (20.2) hinter dem Bremskolben (28) unterteilt und mit einer ersten (34) und einer zweiten Verbindung (30) zwischen den beiden Teilräumen (20.1, 20.2), wobei sich die erste Verbindung (34) in der Nachbarschaft einer dem grössten Durchmesser ($d_{28}$) des Bremskolbens (28) zugeordneten Umfangsfläche (28.7) in einem vorderen Bereich (32) des Hydraulikzylinders (10) erstreckt, der einem ersten Teil einer Rohrrücklaufstrecke zugeordnet ist, und sich die zweite Verbindung (30) durch Bohrungen im Bremskolben (28) und durch den Innenraum (22.5) der hohlen Kolbenstange (22) erstreckt, gekennzeichnet durch folgende Merkmale:

a) die erste Verbindung (34) umfasst eine einteilige radiale Erweiterung (32) des Hydraulikzylinders (10), die zwischen der Umfangsfläche (28.7) des grössten Durchmessers des Brembkolbens (28) und einer Innenwandfläche (18) des Hydraulikzylinders (10) im Bereich der Erweiterung (32) einen Durchlass (34) in Form eines Kreisringspalts bildet,

b) die Erweiterung (32) erstreckt sich in axialer Richtung mit einem grössten Durchmesser ($d_{32}$) über eine Strecke ($l_{32}$), die dem Rücklauf des Rohres während des Geschossdurchgangs durch das Rohr entspricht,

c) der Erweiterung (32) sind im Bremskolben (28) Ausnehmungen (28.3) vorgegebener Breite zugeordnet,

d) jede Ausnehmung (28.3) erstreckt sich von einer Kante (28.8) mit einer Stirnfläche (28.1) des Bremskolbens (28) bis zu einer Kante (28.6) mit der Umfangsfläche (28.7) des Bremskolbens (28),

e) der Querschnitt jeder Ausnehmung (28.3) ist im Bereich der Kante (28.8) am grössten und reduziert sich durch die Ausbildung einer jeweiligen Grundfläche (28.5) im wesentlichen stetig bis auf eine durch die Kante (28.6) der Umfangsfläche (28.7) und der Grundfläche (28.5) gegebene Linie,

f) aus dem Bereich der Grundfläche (28.5) jeder Ausnehmung (28.3) erstreckt sich die zweite Verbindung in Form der Bohrungen (30) bis in den Innenraum (22.5) der hohlen Kolbenstange (22),

g) sowohl beim Rücklauf wie beim Wiedervorlauf des Rohres bleibt die zweite Verbindung durchgängig und wird im betreffenden Bereich der Rück- und Wiedervorlaufstrecke ausschliesslich durch eine Konusfläche (24.8) des Regeldorns (24) beeinflusst und

h) mit dem Innenraum (20) des Hydraulikzylinders (10) ist eine Wärmeausgleichskammer (14) mit einem fliegend angeordneten Ausgleichskolben (24.5) durchgängig verbunden.

## Claim

Hydraulic gun barrel recoil brake (1) for braking the barrel after passage of a projectile, the brake having a hydraulic cylinder (10), a hollow piston rod (22) to accomodate a regulating pin (24), and a brake piston (28) which divides an internal space (20) in the hollow cylinder (10) into a first space (20.1) forward of the brake piston (28) and a second space (20.2) rearward of the brake piston (28) a first connection (34) and a second connection (30) being provided between the two spaces (20.1, 20.2), the first connection (34) extending adjacent a peripheral surface (28.7) associated with the maximum diameter (d12) of the brake piston (28) in the forward end (32) of the hydraulic cylinder (10) which end is associated with a first part of a barrel recoil path, the second connection (30) extending through borings in the brake piston (28) and through the internal space (22.5) of the piston rod (22), characterized by the following features:

(a) The first connection (34) comprises a single-part radially widened portion (32) of the hydraulic cylinder (10) which, between the peripheral surface (28.7) at the maximum diameter of the brake piston (28) and an internal wall surface (18) of the hydraulic cylinder (10) in the region of the widened portion (32), provides a passage (34) in the form of a circular annular gap,

(b) the widened portion (32) extending in the axial direction, by a maximum diameter (d32), over a path $l_{32}$ which corresponds to the recoil distance of the barrel during the passage of the projectile therethrough,

(c) recesses (28.3) of preselected width in the brake piston (28) being associated with the widened portion (32),

(d) each recess (28.3) extending from an edge (28.8) with one end surface (28.1) of the brake piston (28) extending as far as an edge (28.6) with the peripheral surface (28.7) of the brake piston (28),

(e) the cross section of each recess (28.3) being at a maximum in the zone of the edge (28.8) and decreasing through the formation of a base surface (28.5) in each case and at a substantially uniform rate as far as a line determined by the edge (28.6) of the peripheral surface (28.7) and the base surface (28.5),

(f) from the zone of the base surface (28.5) of each recess (28.3) the second connection extending in the form of borings (30) as far as the interior of the internal space (22.5) of the hollow piston rod (22),

(g) both in the recoil and in the forward movement of the barrel the second connection continuing to provide a passage and being influenced, in the relevant zone of the recoil and forward path, only by a conical surface (24.8) of the regulating pin (24),

(h) a heat compensating chamber (14) with a floating compensating piston (24.5) being connected so as to provide a clear passage in conjunction with the internal space (20) of the hydraulic cylinder (10).

## Revendication

1. Frein de recul hydraulique pour freiner le recul du tube du canon dès que le projectile a quitté le tube, comportant un cylindre hydraulique (10), une tige de piston creuse (22) pour recevoir une broche de réglage (24) et reliée au tube, et un piston de freinage (28) qui divise une chambre intérieure (20) du cylindre hydraulique (10) en une première chambre partielle (20.1) avant le piston de freinage (28) et une deuxième chambre partielle (20.2) derrière le piston de freinage (28), et un premier (34) et un second passage (30) entre les deux chambres partielles (20.1, 20.2), le premier passage (34) s'étendant, au voisinage d'une surface périphérique (28.7) correspondant au plus grand diamètre (d28) du piston de freinage (28) dans une zone avant (32) du cylindre hydraulique (10), à laquelle correspond une première partie de la distance de recul du tube, et le second passage (30) s'étendant par des perçages dans le piston (28) et par la chambre intérieure (22.5) de la tige de piston creuse (22), caractérisé par les points suivants:

a) le premier passage (34) comporte un élargissement radial, d'une seule pièce, (32) du cylindre hydraulique (10) qui forme le passage (34) sous forme d'une fente annulaire entre la surface périphérique (28.7) du plus grand diamètre du piston de freinage (28) et une surface de paroi intérieure (18) du cylindre hydraulique (10), dans la zone de l'élargissement (32),

b) L'élargissement (32) s'étend en direction axiale avec un plus grand diamètre (d32) sur une distance (l32) correspondant au recul du tube pendant le passage du projectile dans le tube,

c) des évidements (28.3) de largeur prédéterminée correspondant à l'élargissement (32) sont pratiqués dans le piston de freinage (28),

d) chaque évidement (28.3) s'étend depuis un bord (28.8) avec une face frontale (28.1), du piston (28) jusqu'à un bord (28.6) de la surface périphérique (28.7) du piston de freinage (28),

e) la section de chaque évidement (28.3) est maximale dans la zone du bord (28.8) et diminue par la formation d'une surface de fond respective (28.5) de façon essentiellement constante jusqu'à une ligne définie par le bord (28.6) de la surface périphérique (28.7) et la surface de fond (28.5),

f) le deuxième passage, sous la forme des perçages (30) s'étend depuis la zone de la surface de fond (28.5) de chaque évidement (28.3) jusque dans la chambre intérieure (22.5) de la tige de piston creuse (22).

g) aussi bien lors du recul que lors du retour en avant du tube, le second passage reste ouvert et est influencé dans la zone concernée du trajet de recul et d'avance exclusivement par une surface conique (24.8) de la broche de réglage (24) et

h) une chambre d'équilibrage thermique est reliée à la chambre intérieure (20) du cylindre hydraulique (10) par un piston d'équilibrage (24.5) monté flottant.

FIG.1

FIG. 2

0 027 863